# EUROPÄISCHE PATENTSCHRIFT

(11) **EP 1 719 650 B1**
(45) Veröffentlichungstag und Bekanntmachung des Hinweises auf die Patenterteilung: **14.12.2011**
(21) Anmeldenummer: 06008347.4
(22) Anmeldetag: 21.04.2006
(51) Int. Cl.: B60H 1/32, F25B 9/08

(54) **Vorrichtung zur Luftkonditionierung für ein Kraftfahrzeug**
Air conditioning unit for a vehicle
Climatisation pour véhicule

(30) Priorität: 04.05.2005 DE 102005021396
(43) Veröffentlichungstag der Anmeldung: 08.11.2006
(73) Patentinhaber: Behr GmbH & Co. KG, 70469 Stuttgart (DE)
(72) Erfinder: Burk, Roland, Dipl.-Phys., 70469 Stuttgart (DE); Dürr, Gottfried, Dipl.-Ing., 70437 Stuttgart (DE); Feuerecker, Günther, Dr.rer.nat., 70567 Stuttgart (DE); Kohl, Michael, Dipl.-Ing., 74321 Bietigheim (DE); Manski, Ralf, Dr.-Ing., 70197 Stuttgart (DE); Strauss, Thomas, Dipl.-Ing. (FH), 73274 Notzingen (DE)
(74) Vertreter: Grauel, Andreas

(56) Entgegenhaltungen:
- DE-A1- 10 156 882
- DE-A1-102004 029 510
- US-A- 1 944 472
- PATENT ABSTRACTS OF JAPAN Bd. 018, Nr. 446 (M-1659), 19. August 1994 (1994-08-19) -& JP 06 137695 A (NIPPONDENSO CO LTD), 20. Mai 1994 (1994-05-20)
- PATENT ABSTRACTS OF JAPAN Bd. 2003, Nr. 12, 5. Dezember 2003 (2003-12-05) -& JP 2004 198045 A (DENSO CORP), 15. Juli 2004 (2004-07-15)

## Beschreibung

Die Erfindung betrifft eine Vorrichtung zur Luftkonditionierung für ein Kraftfahrzeug nach dem Oberbegriff des Anspruchs 1. Eine solche wird durch die JP 06 137 695 A offenbart. Die JP 2004 198 045 A zeigt eine Vorrichtung mit zwischen Expansionselement und Trennelement angeordneten Verdampfer.

EP 0 487 002 A2 beschreibt eine Klimaanlage für ein Kraftfahrzeug, bei der zur Verbesserung des Wirkungsgrades ein Ejektor verwendet wird. Der einen Kondensator verlassende Käftemittelstrom expandiert in dem Ejektor unter Aufnahme von Geschwindigkeit, wobei ein zweiter Kältemittelstrom angesaugt und zugemischt wird. Der zweite Strom kommt aus dem einzigen Verdampfer des Systems und erfährt insgesamt eine Druckerhöhung durch die Zuführung zum Ejektor. Zentrales Element für die Funktion ist zudem ein nach dem Ejektor angeordneter Phasentrenner, durch den ein flüssiger Teil abgetrennt und dem Verdampfer zugeführt wird, wogegen ein gäsförmiger Teil des Kältemittels dem Verdichter zugeführt wird. Insgesamt liegt der Saugdruck am Verdichter hierdurch auf einem höheren Niveau als der Druck des Kältemittels nach Verdampfer. Die für eine sichere Funktion der Vorrichtung erforderliche vollständige Trennung nach gasförmiger und flüssiger Phase erfordert einen aufwendigen und viel Bauraum beanspruchenden Phasentrenner. Zudem ist die Anordnung der Leitungen aufinrendiger als bei Klimaanlagen nach dem Stand der Technik.

DE 103 39 235 A1 beschreibt eine Klimaanage für ein Kraftfahrzeug, bei der ein Ejektor in Verbindung mit einem Phasentrenner zur Steigerung des Wirkungsgrades Verwendung findet. Zur Optimierung des Kältekreises unter verschiedenen Betriebsbedingungen ist ein Querschnitt des Ejektors ansteuerbar variabel ausgelegt.

Es ist die Aufgabe der Erfindung, eine Vorrichtung zur Luftkonditionierung für ein Kraftfahrzeug zu schaffen, bei der die Vorteile eines hohen Wirkungsgrades mit einer einfachen und kostengünstigen Bauform kombiniert sind.

Diese Aufgabe wird für eine eingangs genannte Vorrichtung erfindungsgemäß durch die kennzeichnenden Merkmale des Anspruchs 1 gelöst.

Durch das erfindungsgemäße Vorsehen eines zweiten Verdampfers wird erreicht, daß dem Teil des Kältemittels nach Expansionselement, welches dem Verdichter zugeführt wird, ebenfalls eine Kühlleistung entnommen werden kann. Somit kann oder sollte dieser Kältemittelteil noch einen erheblichen Anteil an flüssiger Phase aufweisen.

Erfindungsgemäß ist dem Expansionselement unmittelbar nachfolgend ein Trennelement angeordnet, wobei in dem Trennelement eine Separation und Aufteilung des Kältemittels in einen ersten Teil und einen zweiten Teil erfolgt, wobei der erste Teil einen höheren Flüssigkeitsanteil aufweist als der zweite Teil. Durch die Verbindung mit dem zweiten Verdampfer kann ein im Vergleich mit dem eingangs genannten Stand der Technik nur unvollständig wirkendes und daher kleines Trennelement zur Auftrennung der Phasen des Kältemittels Verwendung finden, was in besonderem Maße Bauraum sowie ein kostspieliges und aufwendiges Bauteil einspart.

Bevorzugt ist das Expansionselement ein an sich bekannter Ejektor, wobei das dem zweiten Eingang des Ejektors zugeführte Kältemittel vor dem Durchströmen des Ejektors einen kleineren Druck aufweist als das den Ausgang des Ejektors verlassende Kältemittel. Hierdurch kann auf einfache Weise der Wirkungsgrad der Vorrichtung gegenüber einer konventionellen Klimaanlage erhöht werden, da zumindest der erste Verdampfer einen Enddruck aufweist, der kleiner ist als der Druck an der Saugseite des Verdichters.

In einer nicht erfindungsgemäßen Abwandlung kann es vorgesehen sein, daß auf ein dem Expansionselement nachfolgendes Trennelement zur zumindest teilweisen Auftrennung des Kältemittels nach flüssiger und gasförmiger Phase verzichtet wird, so daß eine besonders einfache und kostengünstige Bauform bei noch verbleibenden Vorteilen hinsichtlich des Wirkungsgrades und der Kälteleistung realisiert ist.

Zur Vermeidung eines Ansaugens von Flüssigkeit durch den Verdichter ist es bevorzugt vorgesehen, daß dem zweiten Verdampfer nachfolgend und dem Verdichter vorhergehend ein Sammler angeordnet ist.

In hierzu alternativer oder ergänzender Ausführung kann ein dem Kühler, insbesondere Kondensator nachgeordneter Hochdrucksammler vorgesehen sein, um die Funktion der Vorrichtung unter unterschiedlichen Betriebsbedingungen zu gewährleisten.

Weiterhin vorteilhaft kann ein Steuermittel zur Regelung eines Massenstroms des Expansionselements vorgesehen sein, um eine Optimierung der Betriebsparameter jederzeit zu gewährleisten. In einer bevorzugten Ausführung umfaßt dabei das Steuermittel ein dem Expansionselement vorgelagertes, steuerbares Ventil, insbesondere ein thermostatisches Ventil. Dieses kann etwa mittels eines im Bereich der Verdichter-Saugleitung angeordneten Thermofühlers angesteuert werden. Alternativ hierzu kann das Steuermittel auch integral mit dem Expansionselement ausgebildet sein, wie es zum Beispiel im eingangs genannten Stand der Technik beschrieben ist.

In besonders vorteilhafter Ausführung sind der erste Verdampfer und der zweite Verdampfer als bauliche Einheit ausgebildet. Neben dem allgemein durch eine solche Maßnahme verringerten Bauraum können zudem Kostenvorteile erzielt werden, indem auf übliche Baukonzepte zurückgegriffen wird, bei denen zwei Verdampferhälften eines konventionellen Verdampfers in Luftströmungsrichtung nacheinander angeordnet sind. Kleinere konstruktive Maßnahmen können solche Bauteile in zwei separierte, seriell nacheinander angeordnete Verdampfer abändern. Zweckmäßig wird der dem Verdichter vorgeordnete zweite Verdampfer, welcher im Regelfall eine höhere Temperatur hat als der erste Verdampfer, dabei von der Luft zuerst durchströmt.

In weiterer bauraumsparender und kostengünstiger Verbesserung ist ein Trennelement als bauliche Einheit mit zumindest einem der Verdampfer ausgebildet. Dies ist insbesondere dadurch ermöglicht, daß durch den zweiten Verdampfer bedingt ein kleinbauendes Trennelement zumeist ausreichend ist.

Besonders vorteilhaft ist das Expansionselement als bauliche Einheit mit zumindest einem der Verdampfer ausgebildet, um Bauraum und Kosten zu sparen. Vorteilhaft kann das Expansionselement, insbesondere ein Ejektor, etwa in einem Sammel- oder Verteilrohr eines Verdampfers integriert sein. Auch ein kleiner Separator kann hier Platz finden. Eine Integration der beiden Verdampfer, des Ejektors und des Separators zu einer Baueinheit bietet Vorteile hinsichtlich Leistung und Wirkungsgrad, da bei einer konventionellen Klimaanlage bei sonst gleicher Gestaltung der herkömmliche Verdampfer durch die neue Baueinheit ersetzt werden kann. Somit sind herkömmliche Kälteanlagen ohne erheblichen Konstruktionsaufwand in ihrer Leistung verbesserbar.

in einer vorteilhaften Abwandlung ist zumindest einer der Verdampfer als Speicherverdampfer ausgebildet. Ein solcher Verdampfer enthält, wie beispielsweise in der DE 101 56 944 A1 beschrieben, zusätzlich ein Kältespeichermittel, welches im normalen Betrieb gekühlt wird und während eines Stillstands des Verdichters die Kühlungsfunktion der Klimaanlage aufrecht erhält. Hierdurch kann auch eine erfindungsgemäße Vorrichtung eine Klimatisierung bei kurzzeitig abgestelltem Motor bereitstellen, wobei zweckmäßig der erste Verdampfer, der im allgemeinen die niedrigere Temperatur hat, über den Kältespeicher verfügt.

Zum Zweck der einfachen Ausführung mit weit verbreiteten und kostengünstigen Bauteilen ist das Kältemittel ein grundsätzlich unterkritisch betriebenes Kältemittel wie etwa R134a. Alternativ hierzu kann eine erfindungsgemäße Vorrichtung aber auch mit einem gegebenenfalls überkritisch betriebenen Kältemittel, insbesondere dem umweltfreundlichen R744 (Kohlendioxid) betrieben werden. In letzterem Fall kann in zweckmäßiger Ausgestaltung ein innerer Wärmeübertrager zum Wärmeaustausch zwischen zwei Kältemittelströmen vorgesehen sein, wie er allgemein bei Kohlendioxid-Klimaanlagen üblich ist.

Weitere Vorteile und Merkmale der Erfindung ergeben sich aus den nachfolgend beschriebenen Ausführungsbeispielen sowie aus den abhängigen Ansprüchen.

Nachfolgend werden zwei bevorzugte Ausführungsbeispiele einer erfindungsgemäßen Vorrichtung beschrieben und anhand der anliegenden Zeichnungen näher erläutert.
- Fig. 1: zeigt eine schematische Darstellung einer Vorrichtung nach dem Stand der Technik.
- Fig. 2: zeigt ein Druck-Enthalpie-Diagramm zur Funktion der vorbekannten Vorrichtung aus Fig. 1.
- Fig. 3: zeigt eine schematische Darstellung einer ersten Ausführungsform einer erfindungsgemäßen Vorrichtung.
- Fig.4: zeigt ein Druck-Enthalpie-Diagramm zur Funktion der erfindungsgemäßen Vorrichtung aus Fig. 2.
- Fig. 5: zeigt ein Druck-Enthalpie-Diegramm der Vorrichtung aus Fig. 2 bei verringertem Abscheidegrad des Trennelements.
- Fig. 6: zeigt eine schematische Darstellung einer zweiten Ausführungsform einer erfindungsgemäßen Vorrichtung.

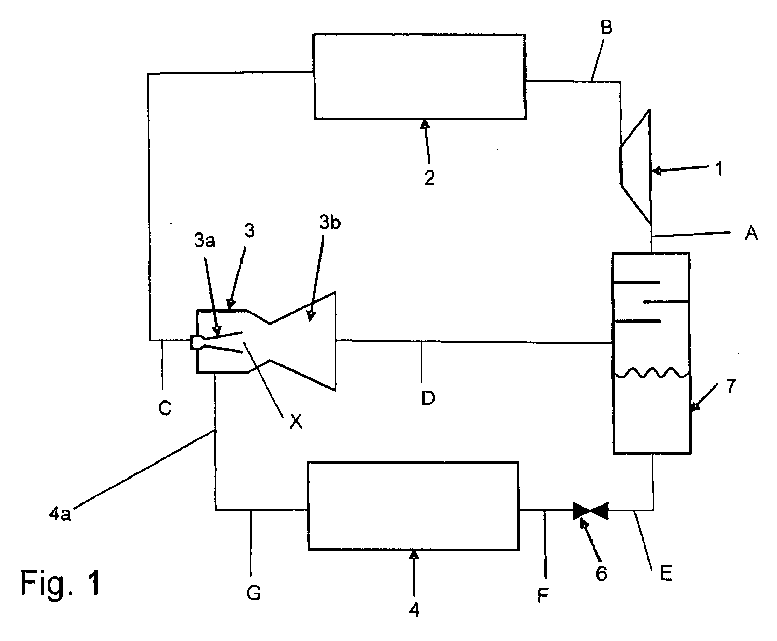

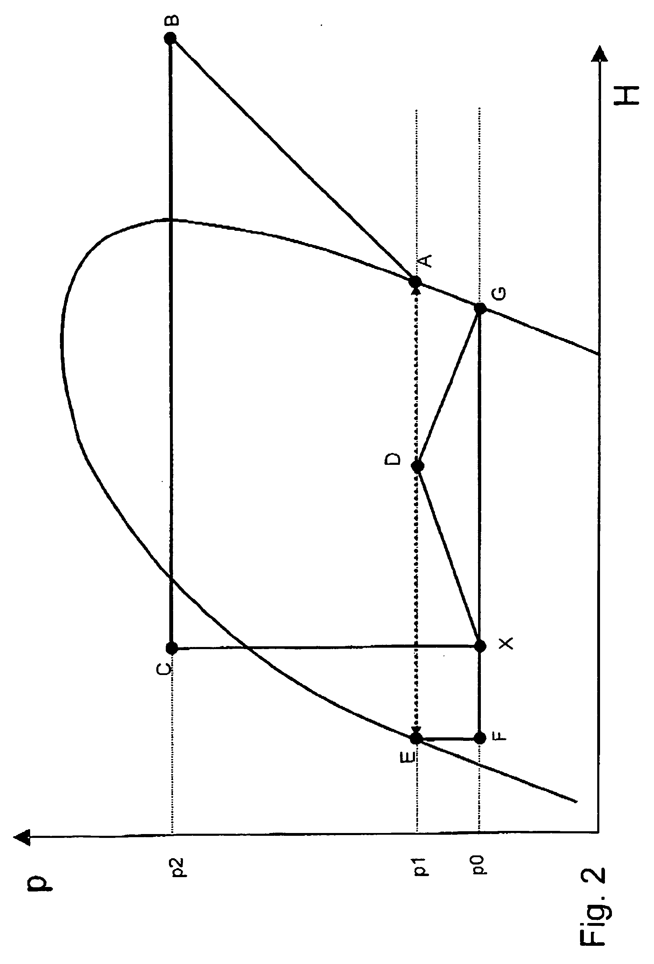

Bei der aus dem Stand der Technik bekannten Vorrichtung (Fig. 1) ist einem Verdichter oder Kompressor 1 ein Kondensator 2 nachgeordnet, welcher ein Kältemittel von einem expandierten Zustand A zunächst in einen komprimierten Zustand B und dann einen komprimierten und gekühlten Zustand C bei hohem Druck p2 überführt. Der Zustand C ist bei kondensierenden Kältemitteln flüssig; bei anderen Kältemitteln wie etwa Kohlendioxid kann er aber auch gasförmig sein. Auf den Kondensator folgt ein als Ejektor 3 ausgebildetes Expansionselement. Der Ejektor 3 hat einen als Düse 3a ausgeformten ersten Eingang für ein Kältemittel, in der das Kältemittel zunächst in einem stark gerichteten Strahl auf den Druck p0 (siehe Fig. 2, Punkt X) entspannt und dabei beschleunigt wird. Nachfolgend mischt sich dieser Gasstrahl mit Kältemittel aus einem in einem zweiten Eingang in den Ejektor mündenden Zweig 4a, der dem Auslaß eines einzigen Verdampfers 4 der Anordnung entspricht. Bei dem Ansaugen des Kältemittels aus dem Zweig 4a wird mechanische Arbeit des gerichteten schnellen Gasstrahls der Düse 3a genutzt. Die Expansion des gerichteten gemischten Strahls in einem Diffusor 3b des Ejektors 3 führt zu einem Druckanstieg des Gemisches auf den Druck p1 (siehe Punkt D in Fig. 2). Dieses Gemisch enthält flüssige und gasförmige Phase des Kältemittels; allgemein sind in den Zustandsdiagrammen nach Fig. 2, Fig. 4 und Fig. 5 Siedelinie und Taulinie eingezeichnet (jeweils linke bzw. rechte Hälfte der gebogenen Kurve), wobei sich zwischen der Siedelinie und der Taulinie der Naßdampfbereich befindet.

Nach dem Verlassen des Ejektors 3 aus einem am Ende des Diffusors 3b angeordneten Ausgang tritt das Kältemittel in ein Trennelement bzw. einen Phasenseparator 7 ein, in dem der flüssige Anteil von dem gasförmigen Anteil getrennt wird. Dies ist in dem Zustandsdiagramm durch die beiden vom Punkt D isobar nach links und nach rechts laufenden punktierten Linien angedeutet. Die abgetrennte rein flüssige Phase entspricht dabei dem Punkt E und die abgetrennte rein gasförmige Phase entspricht dem Punkt A.

Der gasförmige Anteil wird der Saugleitung des Verdichters 1 zugeführt. Der flüssige Teilstrom wird nach dem Trennelement 7 einer Drossel 6 (isenthalpe Entspannung von p1 nach p0 bzw. Punkt E zu Punkt F in Fig. 2) und dann dem Verdampfer 4 zugeführt,den er beim Zustand G verfässt.

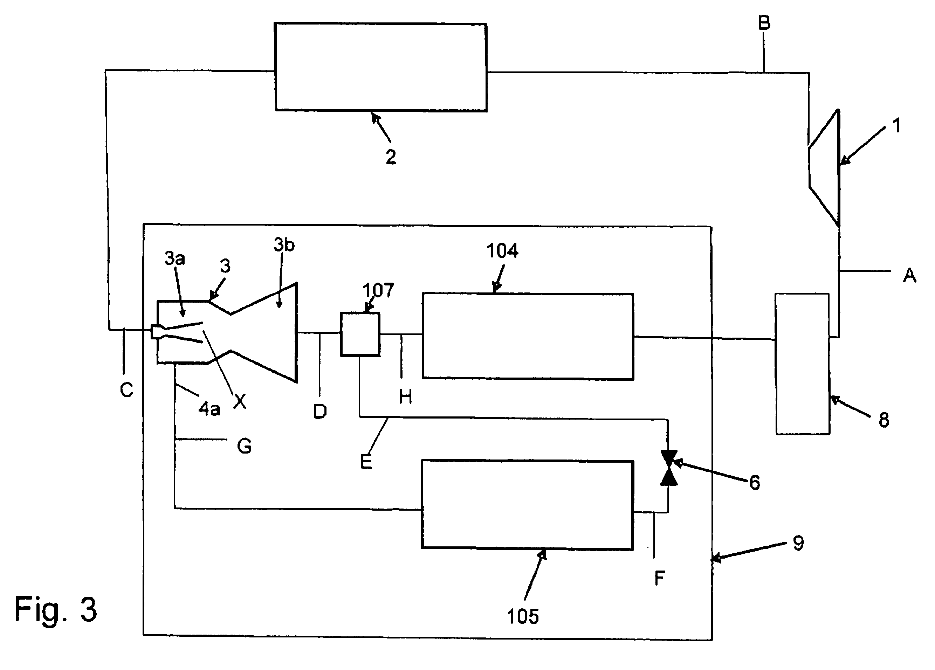

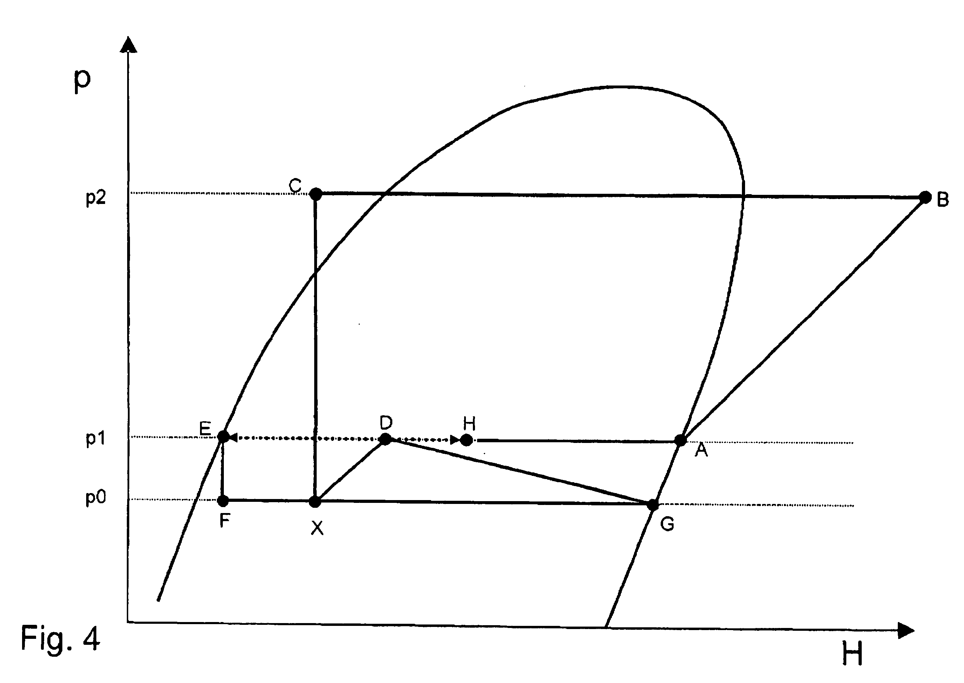

lm Unterschied zu dem Stand der Technik weist die erfindungsgemäße Vorrichtung der ersten Ausführungsform nach Fig. 3 lediglich ein stark vereinfachtes bzw. verkleinertes Trennelement 107 auf. Dieses ist zwar vorteilhaft hinsichtlich seiner Baugröße und Herstellungskosten, jedoch nicht ausreichend bezüglich einer vollständigen Separation von flüssiger Phase und Gasphase. Zwar wird ein erster Verdampfer 105, der kleiner als der einzige Verdampfer 4 nach dem Stand der Technik ist, ausschließlich mit flüssigem Kältemittel beschickt. Jedoch weist der andere Teil des Kältemittels ebenfalls noch flüssige Anteile auf und besteht nicht aus reiner Gasphase. In dem mit der Vorrichtung aus Fig. 3 korrespondierenden Zustandsdiagramm nach Fig. 4 äußert sich dies darin, daß der Punkt E auf der Siedelinie liegt, der Punkt H jedoch noch weit jenseits der Taulinie im Naßdampfbereich.

Dieser Naßdampf gemäß Punkt H in Fig. 4 wird nunmehr einem zweiten Verdampfer 104 zugeführt. Dort wird durch Verdampfung der flüssigen Anteile und entsprechendem Wärmetausch mit zu klimatisierender Luft eine relevante Kühlleistung des Gesamtsystems erzeugt. Dem zweiten Verdampfer 104 ist ein Niederdrucksammler 8 nachgeordnet, dem wiederum die Saugseite des Verdichters 1 folgt. Der Niederdrucksammler stellt wie bei konventionellen Klimaanlagen sicher, daß der Verdichter keine Flüssigkeit ansaugen kann, was zu einer Beschädigung führen könnte.

Aufgrund der unterschiedlichen Drücke ist die Verdampfungstemperatur des Kältemittels im ersten Verdampfer 105 niedriger als im zweiten Verdampfer 104. Zweckmäßig wird die zu klimatisierende Luft somit zunächst über den zweiten Verdampfer 104 und dann über den ersten Verdampfer 105 geleitet. Durch diese stufige Abkühlung der Luft ist eine weitere Verbesserung der Systemleistung bei gegebenen Baugrößen erzielbar, da der Wärmeübergang dem Verlauf der Lufttemperatur besser angepasst ist.

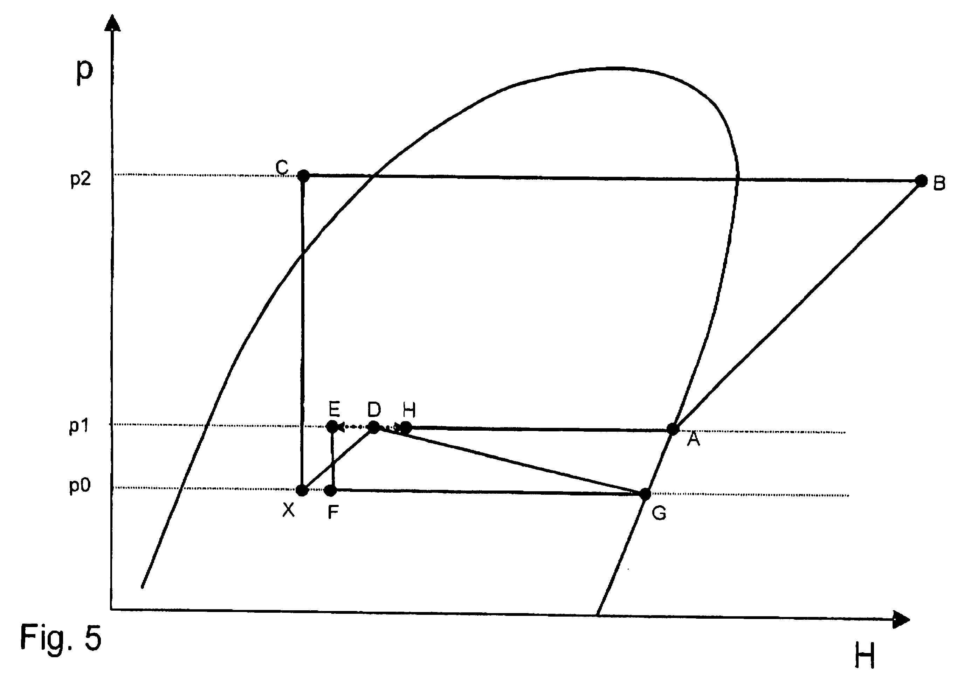

In Abwandlung des Kältemittelzyklus aus Fig. 4 kann es gemäß Fig. 5 vorgesehen sein, daß auch das in dem ersten Sammler 105 bzw. seinem Expansionsorgan 6 zugeführte Kältemittel noch im Naßdampfbereich liegt (siehe Punkt E in Fig. 5). Dies stellt immer noch eine Verbesserung hinsichtlich Leistung und Gesamtwirkungsgrad gegenüber konventionellen Klimaanlagen dar, benötigt jedoch nur noch ein sehr kleines Trennelement 107. In einer nicht erfindungsgemäßen Vereinfachung kann vollständig auf das Trennelement 107 verzichtet werden (Zusammenfall der Punkte E, D und H; nicht dargestettt). Auch bei einer solchen Ausführung werden der Wirkungsgrad und die Kälteleistung gegenüber konventionellen Anlagen erhöht, da weiterhin das Druckniveau der Saugleitung des Verdichters 1 erhöht ist bzw. mechanische Arbeit des Ejektors 3 zur Druckanhebung eines Kältemittelteils von p0 auf p1 genutzt wird. Es ist sogar denkbar, daß im Punkt E ein höherer Gasanteil vorliegt als im Punkt H, etwa, wenn der Druckverlust im zweiten Verdampfer 104 kritisch ist.

Allgemein wird die Wirkung des Ejektorkreises verschlechtert, wenn im Punkt E und somit im Punkt F ein höherer Gasanteil bzw. geringerer Flüssigkeitsanteil vorliegt. Dies liegt darin begründet, daß auch das nicht zur Kälteleistung beitragende Gas durch den Ejektor 3 auf den höheren Druck p1 befördert werden muss. Bei der Gestaltung des Separators ist demnach ein optimaler Kompromiß zwischen Leistungs- und Wirkungsgradverbesserung und apparativem Aufwand zu finden.

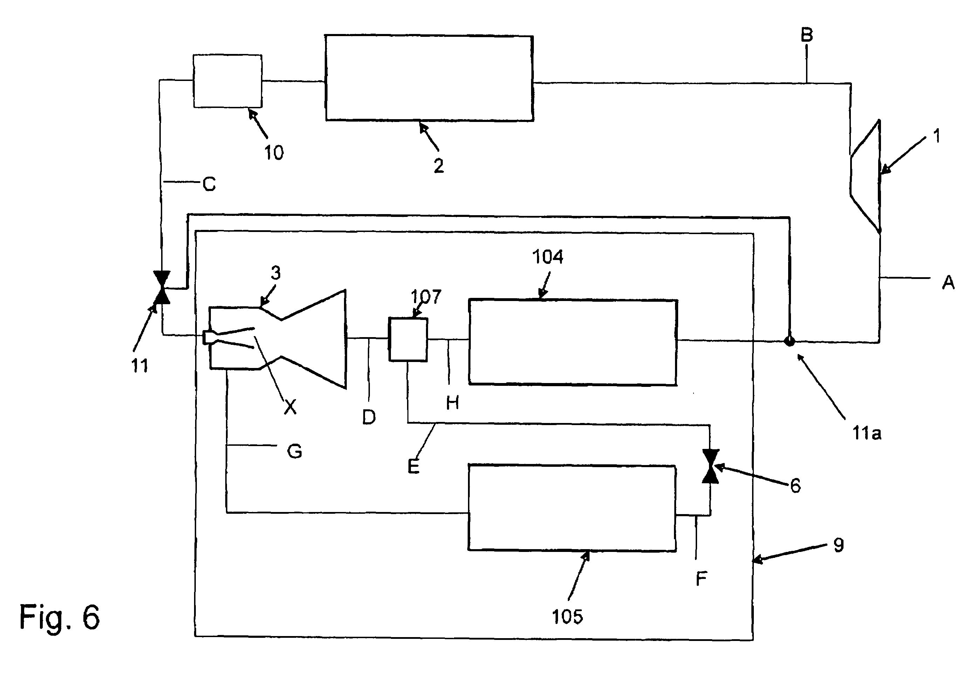

Das zweite bevorzugte Ausührungsbeispiel gemäß Fig. 6 ist vorrangig zum Betrieb mit kondensierenden Kältemitteln geeignet und unterscheidet sich von dem ersten Ausführungsbeispiel wie folgt:

Anstelle eines Niederdrucksammlers ist ein dem Kondensator nachgeordneter Hochdrucksammler 10 vorgesehen. Zwischen Hochdrucksammler 10 und Ejektor 3 ist zudem ein als steuerbares Ventil ausgebildetes Steuermittel 11 angeordnet. Eine Ventilöffnung des Steuermittels 11 erfolgt dabei in Abhängigkeit der Überhitzung in der Saugleitung des Verdichters 1. Hierzu ist ein Thermofühler 11a an der Saugleitung angeordnet. Die Funktion eines solchen Ventils ist analog zu einem thermostatischen Expansionsventil, wie es aus dem Stand der Technik allgemein bekannt ist. Die von der dort gemessenen Überhitzung abhängige Öffnung des Steuermittels 11 stellt somit sicher, daß das in die Saugleitung eintretende Kältemittel stets die notwendige Überhitzung aufweist und somit keine Flüssigkeit durch den Verdichter angesaugt werden kann. Die weiteren Komponenten entsprechen in Anordnung und Funktion dem ersten Ausführungsbeispiel.

## Patentansprüche

1. Vorrichtung zur Luftkonditionierung für ein Kraftfahrzeug, umfassend einen Verdichter (1) zur Kompression eines saugseitig zugeführten Kältemittels,
einen dem Verdichter (1) in Flußrichtung des Kältemittels nachgeordneten Kühler, insbesondere einen Kondensator (2),
ein dem Kühler (2) nachgeordnetes Expansionselement (3), wobei das Expansionselement (3) einen ersten Eingang (3a) zur Zuführung von Kältemittel aus dem Kühler (2) und zumindest einen zweiten Eingang (4a) zur Zuführung von Kältemittel in einem zum ersten Eingang (3a) unterschiedlichen, insbesondere hinsichtlich des Drucks verschiedenen Zustand aufweist und wobei das Expansionselement (3) einen Ausgang zum Auslaß eines Gemisches der beiden Eingänge aufweist, und
einen ersten Verdampfer (105), wobei zumindest ein Teil des aus dem Ausgang ausgelassenen Kältemittels dem ersten Verdampfer (105) zwecks Kühlung eines Luftstroms zuführbar ist und wobei das den ersten Verdampfer (105) verlassende Kältemittel zumindest teilweise dem zweiten Eingang (4a) des Expansionsmittels zuführbar ist, wobei ein Teil des aus dem Ausgang des Expansionsmittels (3) ausgelassenen Kältemittels einem zweiten Verdampfer (104) zuführbar ist, wobei das den zweiten Verdampfer (104) verlassende Kältemittel der Saugseite des Verdichters (1) zuführbar ist, **dadurch gekennzeichnet, dass** dem Expansionselement (3) unmittelbar nachfolgend und vor dem zweiten Verdampfer (104) ein Trennelement (107) angeordnet ist, wobei in dem Trennelement (107) eine Separation und Aufteilung des Kältemittels in einen ersten Teil und einen zweiten Teil erfolgt, wobei der erste Teil einen höheren Flüssigkeitsanteil aufweist als der zweite Teil.

2. Vorrichtung nach Anspruch 1, **dadurch gekennzeichnet, dass** das Expansionselement (3) ein Ejektor ist, wobei das dem zweiten Eingang (4a) des Ejektors zugeführte Kältemittel vor dem Durchströmen des Ejektors (3) einen kleineren Druck aufweist als das den Ausgang des Ejektors verlassende Kältemittel.

3. Vorrichtung nach einem der vorhergehenden Ansprüche, **dadurch gekennzeichnet, dass** dem zweiten Verdampfer (104) nachfolgend und dem Verdichter (1) vorhergehend ein Sammler (8) angeordnet ist.

4. Vorrichtung nach einem der vorhergehenden Ansprüche, **dadurch gekennzeichnet, dass** ein dem Kühler (2) nachgeordneter Hochdrucksammler (10) vorgesehen ist.

5. Vorrichtung nach einem der vorhergehenden Ansprüche, **dadurch gekennzeichnet, dass** ein Steuermittel (11) zur Regelung eines Massenstroms des Expansionselements vorgesehen ist.

6. Vorrichtung nach Anspruch 5, **dadurch gekennzeichnet, dass** das Steuermittel (11) ein dem Expansionselement (3) vorgelagertes, steuerbares Ventil (11, 11a) umfasst.

7. Vorrichtung nach Anspruch 5, **dadurch gekennzeichnet, dass** das Steuermittel integral mit dem Expansionselement (3) ausgebildet ist.

8. Vorrichtung nach einem der vorhergehenden Ansprüche, **dadurch gekennzeichnet, dass** der erste Verdampfer (105) und der zweite Verdampfer (104) als bauliche Einheit ausgebildet sind.

9. Vorrichtung nach einem der vorhergehenden Ansprüche, **dadurch gekennzeichnet, dass** ein Trennelement (107) als bauliche Einheit mit zumindest einem der Verdampfer (104, 105) ausgebildet ist.

10. Vorrichtung nach einem der vorhergehenden Ansprüche, **dadurch gekennzeichnet, dass** das Expansionselement (3) als bauliche Einheit mit zumindest einem der Verdampfer (104, 105) ausgebildet ist.

11. Vorrichtung nach einem der vorhergehenden Ansprüche, **dadurch gekennzeichnet, dass** zumindest einer der Verdampfer (104, 105) als Speicherverdampfer mit einem Kältespeicher ausgebildet ist.

12. Vorrichtung nach einem der vorhergehenden Ansprüche, **dadurch gekennzeichnet, dass** das Kältemittel ein grundsätzlich unterkritisch betriebenes Kältemittel wie etwa R134a ist.

13. Vorrichtung nach einem der Ansprüche 1 bis 11, **dadurch gekennzeichnet, dass** das Kältemittel R744 (Kohlendioxid) ist.

14. Vorrichtung nach Anspruch 12, **dadurch gekennzeichnet, dass** ein innerer Wärmeübertrager zum Wärmeaustausch zwischen zwei Kältemittelströmen vorgesehen ist.

## Claims

1. An air conditioning unit for a motor vesicle, comprising a compressor (1) for compressing a refrigerant which is supplied on the suction side, a radiator, in particular a compressor (2), disposed downstream of the compressor (1) in the flow direction of the refrigerant, an expansion element (3) disposed downstream of the radiator (2), wherein the expansion element (3) comprises a first inlet (3a) for the supply of refrigerant from the radiator (2) and at least one second inlet (4a) for the supply of refrigerant in a state that differs from the first inlet (3a) in terms of pressure in particular, and wherein the expansion element (3) comprises an outlet for the emission of a mixture of the two inlets, and a first evaporator (105), wherein at least a portion of the refrigerant emitted from the outlet can be supplied to the first evaporator (105) to cool an air flow, and wherein the refrigerant leaving the first evaporator (105) can be supplied, at least in part, to the second inlet (4a) of the expansion means, wherein a portion of the refrigerant emitted from the outlet of the expansion means (3) can be supplied to a second evaporator (104), wherein the refrigerant emitted from the second evaporator (104) can be supplied to the suction side of the compressor (1),
**characterized in that** a separating element (107) is disposed immediately downstream of the expansion element (3) and upstream of the second evaporator (104), wherein, in the separating element (107), the refrigerant is separated and distributed into a first part and a second part, wherein the first part comprises a greater portion of fluid than the second part.

2. The device according to claim 1, **characterized in that** the expansion element (3) is an ejector, wherein the refrigerant supplied to the second inlet (4a) of the ejector has a lower pressure before flowing through the ejector (3) than that of the refrigerant emitted from the outlet of the ejector.

3. The device according to one of the preceding claims, **characterized in that** a collector (8) is disposed downstream oaf the second evaporator (104) and upstream of the compressor (1).

4. The device according to one of the preceding claim, **characterized in that** a high-pressure collector (10) is provided downstream of the radiator (2).

5. The device according to one of the preceding claims, **characterized in that** a control means (11) is provided for regulating a mass flow of the expansion element.

6. The device according to claim 5, **characterized in that** the control means (11) comprises a controllable valve (11, 11a) disposed upstream of the expansion element (3).

7. The device according to claim 5, **characterized in that** the control means is integrally formed with the expansion element (3).

8. The device according to one of the preceding claims, **characterized in that** the first evaporator (105) and the second evaporator (104) are in the form of a structural unit.

9. The device according to one of the preceding claims, **characterized in that** a separating element (107) is if the form of a structural unit with at least one of the evaporators (104, 105).

10. The device according to one of the preceding claims, **characterized in that** the expansion element (3) is in the form of a structural unit with at least one of the evaporators (104, 105).

11. The device according to one of the preceding claims, **characterized in that** at least one of the evaporators (104, 105) is in the form of an accumulator evaporator comprising a cold accumulator.

12. The device according to one of the preceding claims, **characterized in that** the refrigerant is a refrigerant that is always operated at a subcritical point, such as R134a.

13. The device according to one of the claims 1 to 11, **characterized in that** the refrigerant is R744 (carbon dioxide).

14. The device according to claim 12, **characterized in that** an internal heat exchanger is provided to exchange heat between two refrigerant flows.

## Revendications

1. Dispositif servant au conditionnement d'air pour un véhicule automobile, comprenant :
- un compresseur (1) servant à la compression d'un fluide frigorigène fourni côté aspiration,
- un refroidisseur, en particulier un condenseur (2), disposé en aval du compresseur (1) dans la direction d'écoulement du fluide frigorigène,
- un détendeur (3) disposé en aval du refroidisseur (2), où le détendeur (3) présente une première entrée (3a) servant à l'alimentation en fluide frigorigène provenant du refroidisseur (2) et au moins une deuxième entrée (4a) servant à l'alimentation en fluide frigorigène dans un état différent de celui de la première entrée (3a), différent en particulier concernant la pression, et où le détendeur (3) présente une sortie servant à l'évacuation d'un mélange des deux entrées, et
- un premier évaporateur (105) ou au moins une partie du fluide frigorigène évacué de la sortie peut être fournie au premier évaporateur (105) à des fins de refroidissement d'un flux d'air, et où le fluide frigorigène quittant le premier évaporateur (105) peut être fourni au moins partiellement à la deuxième entrée (4a) du détendeur, où une partie du fluide frigorigène évacué de la sortie du détendeur (3) peut être fournie à un deuxième évaporateur (104), où le fluide frigorigène quittant le deuxième évaporateur (104) peut être fourni au côté aspiration du compresseur (1),
**caractérisé en ce qu'**un élément de séparation (107) est disposé en faisant suite directement au détendeur (3) et en amont du deuxième évaporateur (104), où il se produit, dans l'élément de séparation (107), une séparation et une répartition du fluide frigorigène en une première partie et en une deuxième partie, où la première partie présente une proportion de liquide supérieure à celle de la deuxième partie.

2. Dispositif selon la revendication 1, **caractérisé en ce que** le détendeur (3) est un éjecteur, où le fluide frigorigène fourni à la deuxième entrée (4a) de l'éjecteur présente, avant de traverser l'éjecteur (3), une pression inférieure à celle du fluide frigorigène quittant la sortie de l'éjecteur.

3. Dispositif selon l'une ou l'autre des revendications précédentes, **caractérisé en ce qu'**un collecteur (8) est disposé en faisant suite au deuxième évaporateur (104) et en précédant le compresseur (1).

4. Dispositif selon l'une quelconque des revendications précédentes, **caractérisé en ce qu'**il est prévu un collecteur à haute pression (10) disposé en aval du refroidisseur (2).

5. Dispositif selon l'une quelconque des revendications précédentes, **caractérisé en ce qu'**il est prévu un moyen de commande (11) servant à la régulation d'un flux massique du détendeur.

6. Dispositif selon la revendication 5, **caractérisé en ce que** le moyen de commande (11) comprend une soupape contrôlable (11, 11a) placée en amont du détendeur (3).

7. Dispositif selon la revendications 5, **caractérisé en ce que** le moyen de commande est configuré en étant intégré au détendeur (3).

8. Dispositif selon l'une quelconque des revendications précédentes, **caractérisé en ce que** le premier évaporateur (105) et le deuxième évaporateur (104) sont configurés comme un ensemble unitaire.

9. Dispositif selon l'une quelconque des revendications précédentes, **caractérisé en ce qu'**un élément de séparation (107) est configuré comme un ensemble unitaire comprenant au moins l'un des évaporateurs (104, 105).

10. Dispositif selon l'une quelconque des revendications précédentes, **caractérisé en ce que** le détendeur (3) est configuré comme un ensemble unitaire comprenant au moins l'un des évaporateurs (104, 105).

11. Dispositif selon l'une quelconque des revendications précédentes, **caractérisé en ce qu'**au moins l'un des évaporateurs (104, 105) est configuré comme un évaporateur à accumulation comprenant un accumulateur de froid.

12. Dispositif selon l'une quelconque des revendications précédentes, **caractérisé en ce que** le fluide frigorigène est un fluide frigorigène, comme par exemple du R134a, fonctionnant fondamentalement à l'état subcritique.

13. Dispositif selon l'une quelconque des revendications 1 à 11, **caractérisé en ce que** le fluide frigorigène est du R744 (dioxyde de carbone).

14. Dispositif selon la revendication 12, **caractérisé en ce qu'**il est prévu un échangeur de chaleur intérieur servant à l'échange de chaleur entre deux flux de fluide frigorigène.
